# EUROPEAN PATENT APPLICATION

(11) **EP 0 603 445 A1**
(43) Date of publication of application: **29.06.1994**
(21) Application number: 92500169.5
(22) Date of filing: 21.12.1992
(51) Int. Cl.: B60J 5/04

(54) **A motor vehicle lateral protection system**

(71) Applicant: Martin Mora, Jacinto, E-28500 Arganda del Rey, Madrid (ES)
(72) Inventor: Martin Mora, Jacinto, E-28500 Arganda del Rey, Madrid (ES)
(74) Representative: Alonso Langle, Emilio

(57) **Abstract**

This system is designed to protect the occupants of a motor vehicle which may be hit side-on by another. Said protection is provided on the side doors (1) of the vehicle, in the form of reinforcement of said doors: the system comprises a set of horizontal rods (2) at different heights which pass through a box (7), all of which is installed inside the door with the rods (2) secured at their ends in the front and back edges of the door (1). On the side opposite the door hinges, a reinforcement is also incorporated in the form of a strip (4) with welded bushes (5) on the inside face for the positioning of the elbowed ends (6) of the rods (2) depending on the shape of the door, and held in place with the bolts (3) through said component or strip (4) and the bushes (5) to screw on to the elbowed ends (6) of the rods (2).

## Description

### SUBJECT OF THE INVENTION

The invention refers to a lateral protection system for motor vehicles, specifically affecting the side doors, strengthening them, thereby providing protection to the actual structure or plate of the door and so to the occupants of the vehicle.

### THE STATE OF THE ART

Day by day, motor vehicle manufacture takes protection of occupants increasingly into account. However, fundamentally, manufacturers strengthen vehicles for head-on collisions.

Nonetheless, when a side collision occurs, i.e. a vehicle runs head-on into the side of another, the occupants of the latter vehicle enjoy very little protection because the doors, the side components of the vehicle, have only limited reinforcement: indeed, such reinforcement may just be limited to the thickness of the door plate since, except for the frame and, of course, the door assembly, there is nothing to strengthen the door. Therefore a lateral impact on a vehicle has an immediate effect on the occupants on that side, since the door is completely deformed, affecting the interior.

### DESCRIPTION OF THE INVENTION

To avoid this problem, the invention has conceived a protective system for side collisions involving motor vehicles, consisting of a reinforcement of the doors themselves so that, if they suffer an impact or collision, deformation of the doors is minimal or, at least, the occupants of that side of the vehicle are unaffected by such collision.

More specifically, the protective system is based on a series of horizontal bars located in each door at different heights and secured at their ends between the front and back edges of the doors: said rods are fixed to and run through a type of flat box inside the door, which acts to distribute stresses at the same time as forming a shield which prevents a sharp angle of the type which would be produced in a collision from protruding into the vehicle interior.

Said box is bolted to the door itself.

On the other hand, the ends of the reinforcement rods secured to the edge opposite the door hinges have a given angle or elbow to adapt to the curvature or outline of any vehicle door: at least two of said reinforcement rods are fixed to a part inside said special outline edge which incorporates bushings welded to the inside face precisely where the elbowed ends of said rods are located, enabling them to be bolted in position.

This ensures that the doors are fully reinforced, particularly in the area or, rather, at the height where a collision will normally occur: thus it is that there are two or three rods, at different heights, making up said reinforcement.

### DESCRIPTION OF THE DRAWINGS

To complete this description and to aid in a better grasp of the characteristics of the invention, these Specifications are accompanied by a set of drawings, forming an integral part hereof which, by way of illustration, and without limitation, represent the following:
Figure 1 shows a broken line side view of a conventional motor vehicle door, with the protective and reinforcement system which is the subject of the invention.
Figure 2 is a lengthwise cross-section view along line A-A of the previous figure, showing chiefly one of the reinforcing rods and the box through which said reinforcing rods run and are secured.

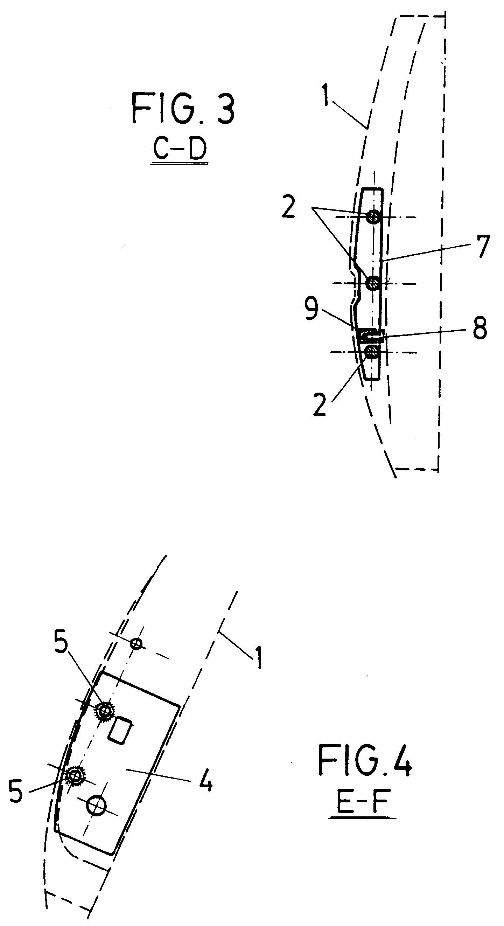

Figure 3 is a transversal cross-section view along line C-D in figure 1, also showing the box through which these three reinforcing rods run and are secured, along with the bush and the bolt mooring said box on to its door.
Figure 4 shows another cross-section detail, along line E-F in figure 1, with the reinforcement and securing elements for the rod ends.

### A PREFERENTIAL DESIGN OF THE INVENTION

From said figures, it can be seen that the system for lateral protection against motor vehicle collisions is specifically applicable to the side doors themselves (1) of the vehicle concerned, providing a reinforcement for such doors (1) to prevent them from deforming, and so protecting the vehicle occupants in case of a collision against either side of another vehicle.

The reinforcement or protective system itself consists of a set of rods (2) located in a horizontal arrangement, with spaces between them, inside the corresponding door (1). Said rods (2) are of course at differing heights and, at one end, are bolted (3) to the edge of the door while, on the opposite edge, for preference opposite the hinge side of the door (1), at least two of said rods are secured with the aid of a reinforcement component (4) whose inside face has bushes (5) welded to it where the elbowed ends (6) of said rods (2) are positioned for mooring with bolts (3) as at the opposite end. Said elbows or end sections (3) on the rods (2) follow the outline of that door edge: they are therefore of greater or lesser size and more or less angled, in all cases depending on the outline of that side of the door.

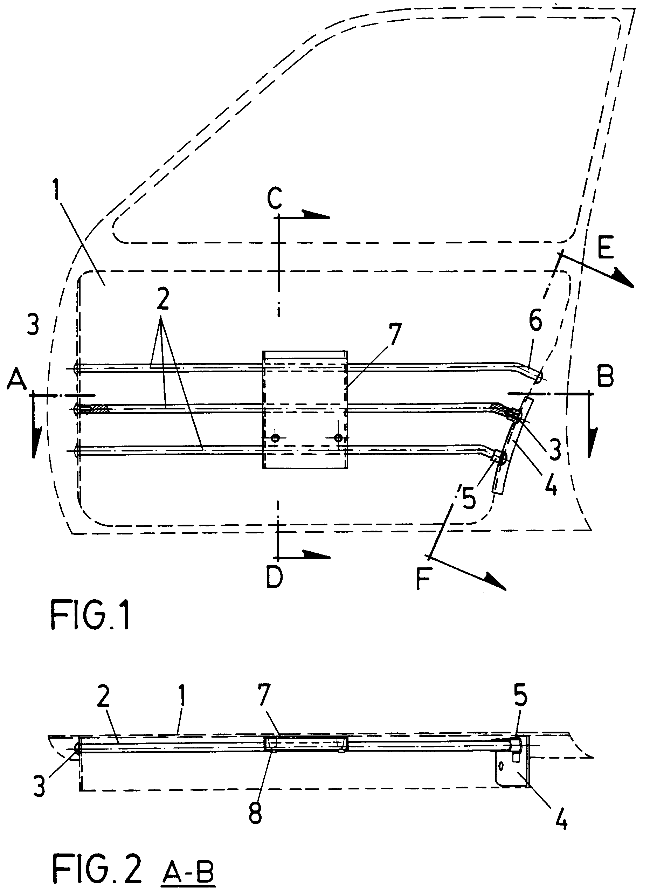

For their part, the rods (2) run through a box (7) located in the centre of the door (1) as shown in figures 1 and 2, bolted in place (8) through internal bushes (9).

Said box (7), as already pointed out, is located in the centre of the door (1) and provides a means to distribute stresses as well as a protective shield to prevent impact with the possible angled deformation of the door (1) causing it to penetrate the interior of the vehicle. The vehicle occupants are thereby fully protected.

Finally, component (4), consisting basically of a strip, is a reinforcing element which, while designed for location on the side of the door opposite the hinges, and affecting two of the rods, may be located in some other position and may even be longer, shorter or of a different width, in all cases depending on each door model.

This constitutes a reinforcement of the doors (1) and, more importantly, protection for the vehicle occupants: if a collision occurs involving such door, it will hardly be deformed as the impact will be absorbed by the rods themselves (2) and the box (7) which is secured to them.

It is not considered necessary to further extend this description in order for any expert in the field to grasp the scope of the invention and benefits arising therefrom.

The materials, shape, size and arrangement of the components may vary provided that this does not alter the essence of the invention.

The terms of these Specifications must be interpreted at all times broadly and without limitation.

## Claims

1. A lateral protective system for motor vehicles designed for use on the side doors of such motor vehicles in order to strengthen them and prevent an impact or collision involving them from affecting the vehicle occupants, consisting essentially of a horizontal arrangement of a set of rods (2) inside the door itself (1), secured at their ends by bolts (3) to the front and rear edges of said door (1), and which run through a central box (7) which is also located and secured inside the door, forming a stress distributor and a protective shield against inward angled deformations.

2. A lateral protective system for motor vehicles as set forth in claim 1, wherein the ends of the rods (2) running to the side of the door opposite the hinges are elbowed to form end sections (6) depending on the shape of the door itself (1) so that, at that end, the fitting of a given rod (2) is complemented by a strip component (4) with bushes welded to it in position for the elbowed ends (6) of said rods (2) and fixed in place by bolts (3) through said reinforcing element or strip (7) and the bushes (5) as such.

3. A lateral protective system for motor vehicles as set forth in the previous claims, wherein the box (7) is secured by bolts (8) with the aid of internal bushes (9) in the door (1), aligned with an area which is centred both height- and width-wise.
